# EUROPEAN PATENT APPLICATION

(11) **EP 2 899 661 A1**
(43) Date of publication of application: **29.07.2015**
(21) Application number: 13838284.1
(22) Date of filing: 13.05.2013
(51) Int. Cl.: G06F 21/10

(54) **LICENSE CONTROL SYSTEM, LICENSE CONTROL METHOD, LICENSE APPLICATION DEVICE, AND NON-TRANSITORY COMPUTER-READABLE MEDIUM WHEREUPON PROGRAM IS STORED**

(30) Priority: 18.09.2012 JP 2012204213
(71) Applicant: NEC Corporation, Tokyo 108-8001 (JP)
(72) Inventor: KAWADA,Koji, Tokyo 108-8001 (JP)
(74) Representative: Glawe, Delfs, Moll
(86) International application number: PCT/JP2013/003061
(87) International publication number: WO 2014/045490

(57) **Abstract**

A license management device 200 transmits a license key generation request for generation of a license key for a wireless device 400 to a key generation device 300 via a network and transmits the license key for the wireless device 400 that is received from the key generation device 300 to a license application device 100. The key generation device 300 generates the license key for the wireless device 400 in response to the license key generation request and transmits it to the license management device 200. The license application device 100 is connected offline to the wireless device 400 and applies the received license key to the wireless device 400.

## Description

### Technical Field

The present invention relates to a license control system, a license control method, a license application device, and a non-transitory computer-readable medium whereupon program is stored.

### Background Art

In recent years, a wireless device having a wireless function has various functions. When such wireless device is sold, a sales method in which the wireless device with limited functions is sold and after it is sold, a purchaser makes another contract in order to make the function of the wireless device available is widely used. Specifically, in the wireless device, each function can be set to be available or unavailable according to information on a license key. It is assumed that information on the license key in an initial state is set so as to make a predetermined function to be unavailable. When the purchaser makes a license agreement, the information on the license key is rewritten according to the license agreement. As a result, the corresponding function of the wireless device is made to be available.

It is requested to make each function of the wireless device to be available or unavailable at the time of addition, relocation, or the like of the wireless device in a certain system. When such request is made, in a general license management system, a license management device overwrites the information on the license key of the wireless device by using a default key that is unique to each wireless device. By this process, the restriction on each function of the wireless device is released and the state of each function can be returned to an original state (a state of default). After this process, by upgrading the license key, each function of the wireless device is set to be available or unavailable.

Further, in Patent Literature 1, there is disclosed a system in which the license of electronic data is stored offline and while ensuring security of the license, the license is transmitted so as to be conveniently used by the user.

### Citation List

### Patent Literature

PTL 1: Japanese Patent Application Laid-Open No. 2008-271564

### Summary of Invention

### Technical Problem

When addition or relocation of the wireless device is carried out, the wireless device may be placed in an environment in which the wireless device cannot be connected to any other device via the network. In the above-mentioned license management system, a problem in which when the wireless device and the license management device are not connected to the network, the license key cannot be adapted occurs.

The present invention is made in view of the above-mentioned problem. A main object of the present invention is to provide a license control system in which even when the wireless device and the license management device are not connected to the network, each function of the wireless device can be set to be available or unavailable, a license control method, a license application device, and a non-transitory computer-readable medium whereupon program is stored.

### Solution to Problem

One aspect of a license control system of the present invention includes a license management device, a license application device, and a key generation device, wherein
the license management device transmits a license key generation request for generation of a license key for a wireless device to the key generation device via a network and transmits the license key for the wireless device that is received from the key generation device to the license application device,
the key generation device generates the license key for the wireless device in response to the license key generation request and transmits it to the license management device, and
the license application device is connected offline to the wireless device and applies the received license key to the wireless device.

One aspect of a license control application device of the present invention includes
key acquisition means which transmit a license generation request related to a wireless device to a license management device via a network and receive a license key generated in response to the request,
key storage means which store the license key acquired by the key acquisition means in relation to identification information of the wireless device, and
key application means which apply the license key read from the key storage means based on the identification information of the wireless device to the wireless device in a state in which the key application means are connected offline to the wireless device.

One aspect of a license control method according to the present invention is a license control method in a license control system including a license management device, a license application device, and a key generation device wherein
the license management device transmits a license key generation request for generation of a license key for a wireless device to the key generation device and transmits the license key for the wireless device that is received from the key generation device to the license application device,
the key generation device generates the license key for the wireless device in response to the license key generation request and transmits it to the license management device, and
the license application device is connected offline to the wireless device and applies the received license key to the wireless device.

One aspect of a non-transitory computer-readable medium whereupon program is stored according to the present invention is a non-transitory computer-readable medium whereupon program is stored which causes a computer to carry out processes of:
transmitting a license generation request related to a wireless device to a license management device via a network and receiving a license key generated in response to the request, and
applying the license key to the wireless device in a state of being connected offline to the wireless device.

### Advantageous Effects of Invention

The present invention can provide a license control system, a license control method, a license application device, and a non-transitory computer-readable medium whereupon program is stored, in which even when a wireless device and a license management device are not connected to a network, a license can be applied to the wireless device.

### Brief Description of Drawings

[FIG. 1A] FIG. 1A is a block diagram showing a configuration of a license control system according to an exemplary embodiment 1.
[FIG. 1B] FIG. 1B is a block diagram showing a configuration of a license control system according to an exemplary embodiment 1.
[FIG. 2] FIG. 2 is a block diagram showing a configuration of a wireless device 400 according to an exemplary embodiment 1.
[FIG. 3] FIG. 3 is a block diagram showing a configuration of a license application device 100 according to an exemplary embodiment 1.
[FIG. 4] FIG. 4 is a block diagram showing a configuration of a license management device 200 according to an exemplary embodiment 1.
[FIG. 5] FIG. 5 is a conceptual diagram showing a table managed by an upper limit number storage unit 204 according to an exemplary embodiment 1.
[FIG. 6] FIG. 6 is a block diagram showing a configuration of a key generation device 300 according to an exemplary embodiment 1.
[FIG. 7A] FIG. 7A is a sequence diagram showing a license control procedure in a license control system according to an exemplary embodiment 1.
[FIG. 7B] FIG. 7B is a sequence diagram showing a license control procedure in a license control system according to an exemplary embodiment 1.
[FIG. 8] FIG. 8 is a block diagram showing a rough configuration of a license control system according to an exemplary embodiment 1.

### Description of Embodiments

### <Exemplary embodiment 1>

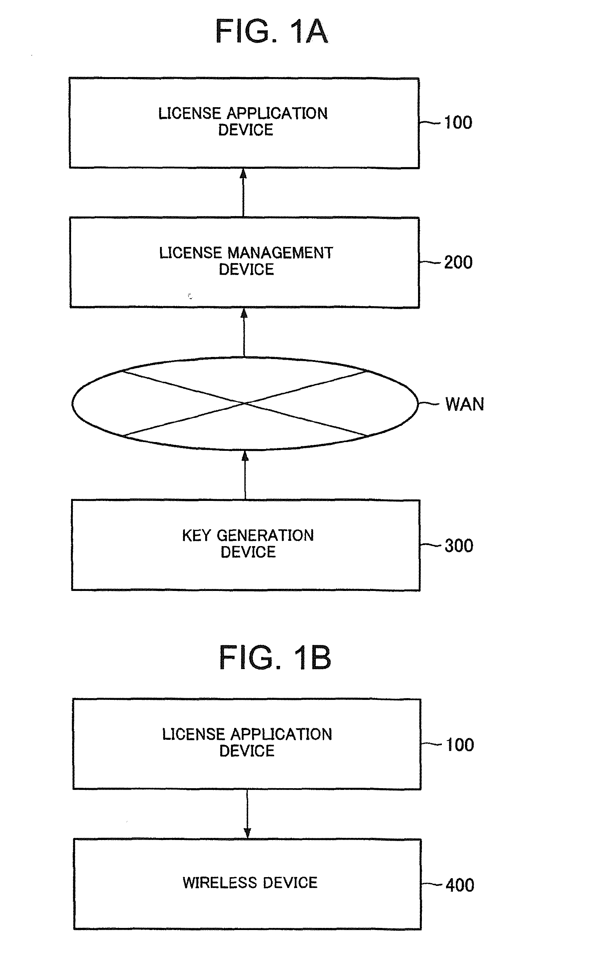

An exemplary embodiment of the present invention will be described below with reference to the drawings. FIG. 1 (FIG. 1A and FIG. 1B) is a block diagram showing a configuration of a license control system according to this exemplary embodiment. The license control system includes a license application device 100, a license management device 200, a key generation device 300, and a wireless device 400.

Further, the license application device 100, the license management device 200, and the wireless device 400 are held and managed by a purchaser of the wireless device 400. On the other hand, the key generation device 300 is held and managed by a seller (or a manufacturer) of the wireless device 400.

When a license key (a default key and an upgrade key) for the wireless device 400 is required, the license application device 100 is connected to the license management device 200 via a network. Further, when adapting the license key acquired from the license management device 200 to the wireless device 400, the license application device 100 is connected offline to the wireless device 400. Namely, a user (preferably, an administrator of the system) brings the license application device 100 to a physical location at which the wireless device 400 exists and connects it to the wireless device 400 in offline. Because the license adaptation device 100 has to be portable, its preferred example is, a laptop PC, a tablet PC, or the like. Further, it is only necessary that the wireless device 400 can be connected offline to the license application device 100 (both devices can be connected to each other without using the network) and the connection method is not limited in particular.

FIG. 1A is a figure showing a configuration in which the license application device 100 and the license management device 200 are connected to the network. For example, both terminals are connected to each other via a WAN (Wide Area Network). FIG. 1B is a figure showing a configuration in which the license application device 100 is connected offline to the wireless device 400. As mentioned above, the license application device 100 applies the license key acquired from the license management device 200 to the wireless device 400.

### <Configuration of the wireless device 400>

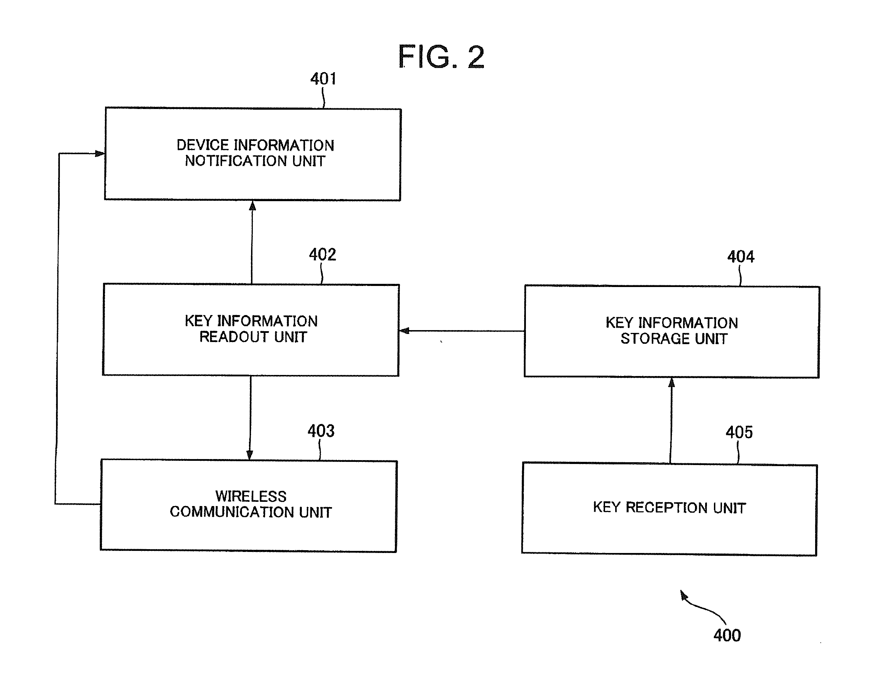

The configuration of each device will be described in detail below. FIG. 2 is a schematic block diagram showing a configuration of the wireless device 400. The wireless device 400 includes a device information notification unit 401, a key information readout unit 402, a wireless communication unit 403, a key information storage unit 404, and a key reception unit 405.

In the wireless device 400, each function of the wireless device 400 is set to be available or unavailable according to information on the license key which specifies the operation. The predetermined function of the wireless device 400 in an initial state is set to be unavailable according to the information on the default key. After that, when the information on the default key is rewritten by using the upgrade key, each function that is set to be unavailable can be set to be available. The license key is encrypted by using identification information unique to each wireless device 400. Therefore, the license key used for one device cannot be used for the other devices.

The key information storage unit 404 stores information on the license key for the wireless communication unit 403. Further, the information on the license key stored by the key information storage unit 404 is encrypted by using an encryption key unique to each wireless device 400.

The key reception unit 405 receives the default key from the license application device 100. The key reception unit 405 overwrites the information on the license key stored by the key information storage unit 404 by using the received default key. Further, the key reception unit 405 receives the upgrade key that is a difference from the default key from a license key application device 100 and overwrites the information on the license key stored by the key information storage unit 404 by using the received upgrade key.

The key information readout unit 402 decrypts the information on the license key stored by the key information storage unit 404 by using the encryption key unique to the wireless device 400 and reads out information about function restriction (information indicating whether the function is available or unavailable) that is shown by the information on the license key.

The information on the license key that is read out by the key information readout unit 402 is inputted to the wireless communication unit 403. According to this input, the wireless communication unit 403 sets each function to be available or unavailable and carries out a communication process related to each function that is set to be available.

The information on the license key read out by the key information readout unit 402 is inputted to the device information notification unit 401. According to this input, the device information notification unit 401 notifies the license application device 100 of device information (information of a license status (available or unavailable) of each function and the identification information of the wireless device 400) including information of the function set to be available in the wireless device 400.

### <Configuration of the license application device 100>

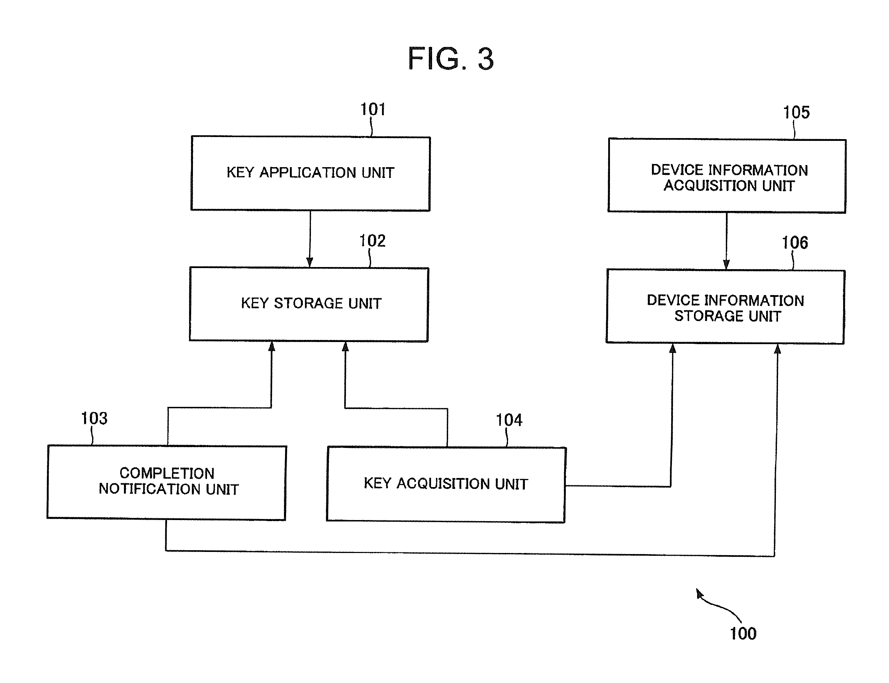

Next, the configuration of the license application device 100 will be described. FIG. 3 is a block diagram showing a rough configuration of the license application device 100 according to this exemplary embodiment. The license application device 100 includes a key application unit 101, a key storage unit 102, a completion notification unit 103, a key acquisition unit 104, a device information acquisition unit 105, and a device information storage unit 106.

The key acquisition unit 104 transmits a request for acquiring the default key and the upgrade key for the wireless device 400 to the license management device 200 and receives the default key and the upgrade key transmitted from the license management device 200 in response to the request. The request transmitted to the license management device 200 includes the identification information of the wireless device 400. Further, the default key and the upgrade key received by the key acquisition unit 104 are associated with the identification information of the wireless device 400 to which the default key and the upgrade key are applied.

The key storage unit 102 stores the license key (the default key and the upgrade key) acquired by the key acquisition unit 104 in relation to the identification information of the wireless device 400.

The key application unit 101 acquires the identification information of the wireless device 400 and acquires the default key or the upgrade key from the key storage unit 102 based on the identification information. The key application unit 101 applies the acquired default key or upgrade key to the wireless device 400 that is an application target.

When the application of the license key is completed or canceled, the completion notification unit 103 transmits the information on the license key whose application is completed or canceled to the license management device 200. Further, the completion notification unit 103 deletes the license key (the default key and the upgrade key) for the wireless device 400 that is the application target from the key storage unit 102 after transmitting the information.

The device information acquisition unit 105 requests the identification information unique to the wireless device 400 and the information on the license key applied at present to the wireless device 400. Further, the device information acquisition unit 105 receives the identification information of the wireless device 400 and the information on the license key transmitted in response to the request.

The device information storage unit 106 stores the information on the license key received by the device information acquisition unit 105 in relation to the identification information of the wireless device 400. Namely, the device information storage unit 106 stores the information on the license key applied to each wireless device 400 in the system.

### <Configuration of the license management device 200>

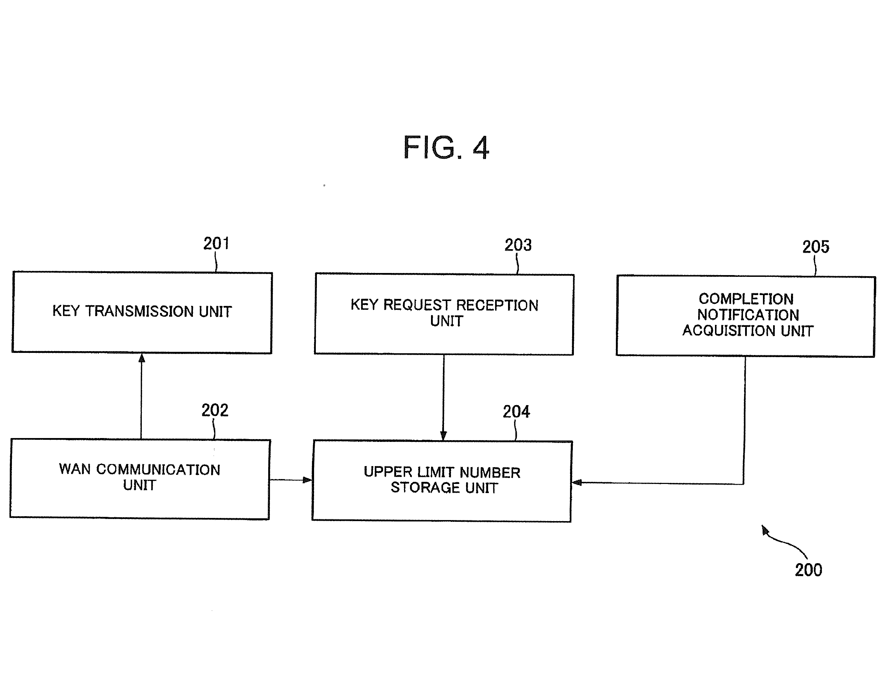

Next, the configuration of the license management device 200 will be described. FIG. 4 is a block diagram showing a rough configuration of the license management device 200 according to this exemplary embodiment. The license management device 200 includes a key transmission unit 201, a WAN communication unit 202, a key request reception unit 203, an upper limit number storage unit 204, and a completion notification acquisition unit 205.

The WAN communication unit 202 transmits a request for generating the default key and the upgrade key for the wireless device 400 in relation to the identification information of the wireless device 400 to the key generation device 300 connected via the WAN (Wide Area Network). Further, the WAN communication unit 202 receives the default key and the upgrade key for the wireless device 400 together with the identification information of the wireless device 400 from the key generation device 300.

The key transmission unit 201 transmits the default key and an upgrade key that are received by the WAN communication unit 202 to the license application device 100 as the information on the license key.

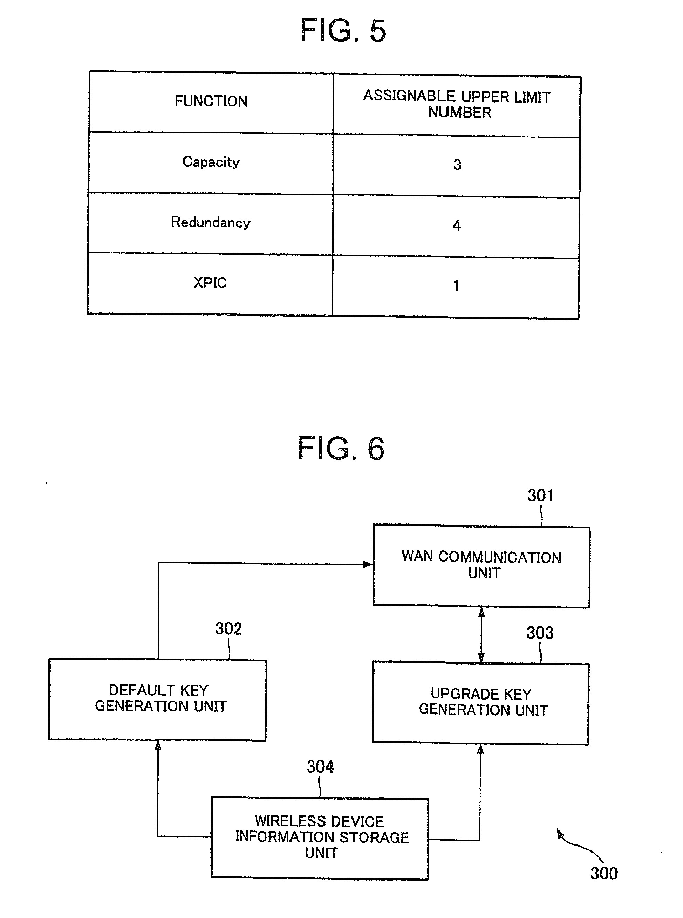

The upper limit number storage unit 204 manages the allowable number of licenses of each function in the whole system. An example of the configuration of the upper limit number storage unit 204 will be described with reference to FIG. 5. The upper limit number storage unit 204 manages each function of the wireless device 400 and the number of licenses of each function that can be given in the whole system. For example, from FIG. 5, it is shown that a function of "XPIC (cross polarization interference canceller)" can be applied to the remaining three wireless devices 400. The value (refer to FIG. 5) shown in a table held by the upper limit number storage unit 204 is updated by the completion notification unit 205 after the application of the license key is completed.

The key request reception unit 203 receives a request for issuing the license key that is transmitted from the license application device 100. This issuance request includes the identification information of the wireless device 400. The key request reception unit 203 acquires the number (assignable upper limit number) of licenses that can be given to each function from the upper limit number storage unit 204. In a case in which if the license is issued in response to the issuance request, the total number of issued licenses exceeds the assignable upper limit number, the key request reception unit 203 discontinues transmission of (does not transmit) the key generation request to the key generation unit 300 via the WAN communication unit 202. Namely, in this case, the key request reception unit 203 does not issue the license. Alternatively, the key request reception unit 203 carries out control so that the license is prevented from being issued to the function to which the license cannot be assigned.

The completion notification unit 205 receives a completion notification from the license application device 100 and updates the content stored in the upper limit number storage unit 204 based on the received completion notification.

### <Configuration of the key generation device 300>

Next, the configuration of the key generation device 300 will be described. The key generation device 300 includes a WAN communication unit 301, a default key generation unit 302, an upgrade key generation unit 303, and a wireless device information storage unit 304.

The wireless device information storage unit 304 stores the identification information of each wireless device 400 included in the license control system in relation to the encryption key unique to each wireless device 400. It is assumed that the encryption key for each wireless device 400 is set to the wireless device information storage unit 304 before the system is operated.

The default key generation unit 302 acquires the encryption key from the wireless device information storage unit 304 by using the identification information of the wireless device 400 that is received by the WAN communication unit 301. The default key generation unit 302 generates the default key unique to each wireless device 400 by encrypting the existing license key with the encryption key.

The upgrade key generation unit 303 generates the upgrade key unique to the wireless device 400 based on the identification information of the wireless device 400 included in the upgrade key generation request received by the WAN communication unit 301 and information of the function that is an upgrade target. The upgrade key generation unit 303 encrypts the upgrade key with the encryption key.

The WAN communication unit 301 transmits the default key generated by the default key generation unit 302 to the license management device 200 via the WAN. Further, the WAN communication unit 301 receives the upgrade key generation request received from the license management device 200. The WAN communication unit 301 transmits the upgrade key generated in response to the upgrade key generation request to the license management device 200.

### <Operation at the time of replacement of the license key>

Operation of each device at the time of changing the license key for the wireless device 400 will be explained below with reference to a sequence diagram. When the license key for the wireless device 400 is changed, the license key is removed and a new license key is applied (the default key and the license key are applied).

The license key can be applied by carrying out the following processes: (1) a process in which device information including the information on the license key and an identification number unique to the device is read out from the wireless device 400 and an allowable upper limit number table in the license key management device 200 is updated based on the device information and (2) a process in which the default key is applied to the wireless device 400.

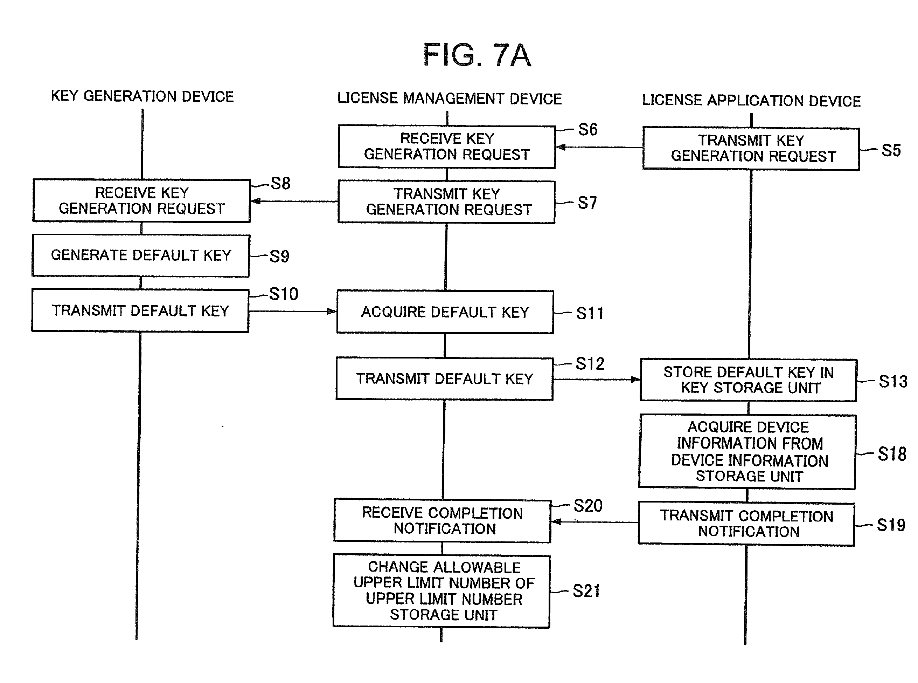

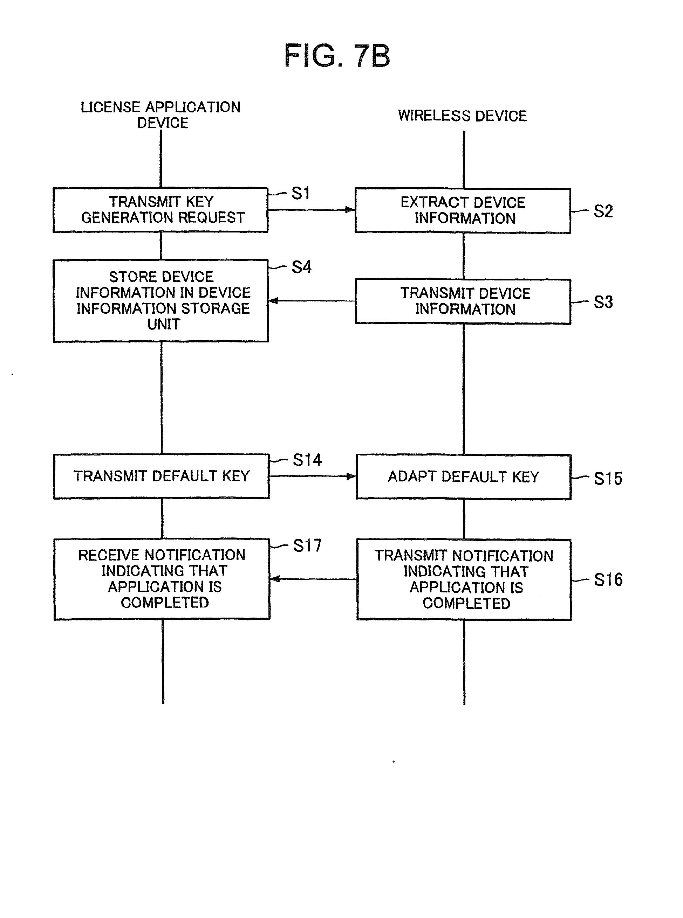

FIG. 7A is a sequence diagram showing a procedure of generating and transmitting the default key carried out by the key generation device 300, the license management device 200, and the license application device 100. Further, FIG. 7B is a sequence diagram showing a procedure of applying the default key for the wireless device 400 by the license application device 100.

The user (the purchaser) requests the license application device 100 to remove the license key for the wireless device 400 (S1 in FIG. 7B). The device information notification unit 401 acquires information on the license key from the key information readout unit 402 and transmits the device information (a license status of each function and the identification information of the wireless device 400) to the license application device 100 (S2 in FIG. 7B). The device information acquisition unit 105 acquires the device information of the wireless device 400 from the wireless device 400 (S3 in FIG. 7B). The device information acquisition unit 105 stores the acquired license status of each function in relation to the acquired identification information of the wireless device 400 in the device information storage unit 106 (S4 in FIG. 7B). The processes S1 to S4 in FIG. 7B are realized by transmitting and receiving the information between the license application device 100 and the wireless device 400 that are connected offline (for example, a state in which both the devices are connected to each other by a physical cable). By this process, the license status of the wireless device 400 before the default key is applied is inputted to the device information storage unit 106.

Next, the user (the purchaser) connects the license application device 100 to the license management device 200. The user requests the license application device 100 to generate the default key for the wireless device 400 (S5 in FIG. 7A). This request includes the identification information of the wireless device 400 to which the default key is applied.

The license application device 100 transfers the received request to the license management device 200 (S6 in FIG. 7A). The key request reception unit 203 receives the request and acquires the assignable upper limit number of each function in the upper limit number storage unit 204. Here, when the assignable upper limit number of the function planned to be assigned is zero, the key request reception unit 203 notifies the license application device 100 of information indicating that the default key cannot be generated and ends the process. When enough number of function would be assignable to reach to the limit number of the function, the WAN communication unit 202 in the license management device 300 transmits a default key generation request to the key generation device 300 after receiving the default key generation request (S7 in FIG. 7A). The default key generation request includes the identification information of the wireless device 400.

The WAN communication unit 301 in the key generation device 300 receives the default key generation request transmitted from the license management device 200 (S8 in FIG. 7A). The default key generation unit 302 acquires the encryption key from the wireless device information storage unit 304 by using the identification information of the wireless device 400 included in the default key generation request as a retrieval key. The default key generation unit 302 generates the default key (S9 in FIG. 7A).

The default key generation unit 302 encrypts the generated default key by using the acquired encryption key. The WAN communication unit 301 transmits the encrypted default key to the license management device 200 (S10 in FIG. 7A). At this time, the WAN communication unit 301 transmits the encrypted default key in relation to the identification information of the wireless device 400 to the license management device 200.

The WAN communication unit 202 in the license management device 200 receives the default key transmitted from the key generation device 300 (S11 in FIG. 7A). The WAN communication unit 202 transmits the received default key to the license application device 100 (S12 in FIG. 7A).

The key acquisition unit 104 in the license application device 100 receives the transmitted default key. The key acquisition unit 104 stores the acquired default key in relation to the identification number of the wireless device 400 in the key storage unit 102 (S13 in FIG. 7A).

Next, the user (the purchaser) connects the license application device 100 to the wireless device 400 and carries out a process for applying the default key. First, the key application unit 101 receives the identification information of the wireless device 400. The key application unit 101 extracts the default key associated with the identification information from the key storage unit 102. The key application unit 101 transmits the extracted default key to the wireless device 400 to which the default key is applied (S14 in FIG. 7B).

The key reception unit 405 in the wireless device 400 receives the default key. The key reception unit 405 stores the received default key in the key information storage unit 404. By this process, the application of the default key ends (S 15 in FIG. 7B). The wireless device 400 notifies the license application device 100 after the default key is applied (S16 in FIG. 7B). The license application device 100 receives the notification indicating that the application is completed (S 17 in FIG. 7B).

Next, the user connects the license application device 100 to the license management device 200 and requests transmission of the completion notification indicating that removal of the license key is completed. The license application device 100 receives the completion notification. The completion notification unit 103 acquires the device information from the device information storage unit 104 based on the identification information included in the request (S 18 in FIG. 7A). This device information is stored by the process mentioned above (S4 in FIG. 7B) and indicates a license allocation status (a setting status (available or unavailable) of each function) of the wireless device 400 before the default key is applied. The completion notification unit 103 transmits the completion notification including the acquired device information to the license management device 200 (S19 in FIG. 7A). The completion notification includes the device information and the identification information of the wireless device 400.

The license management device 200 receives the device information (S20 in FIG. 7A). The completion notification acquisition unit 205 notifies the upper limit number storage unit 204 of a changed value of an allowable upper limit number in the table (refer to FIG. 5) of the upper limit number storage unit 204 based on the difference between the device information included in the completion notification and the default key issued to the wireless device 400. The upper limit number storage unit 204 changes the allowable upper limit number of each function based on the changed value (S21 in FIG. 7A).

By the above mentioned processes, the default key is applied to the wireless device 400. A procedure for applying the upgrade key is approximately the same as the procedure shown in FIG. 7A and FIG. 7B. Therefore, the detailed description will be omitted. However, when the upgrade key is applied, the user needs to explicitly notify the license application device 100 of a name of the function to be set to be available.

Next, the advantageous effect of the license control system according to this exemplary embodiment will be described. In the license control system according to this exemplary embodiment, the license management device 200 which manages the license is configured as a separate device from the license application device 100 which applies the license to the wireless device 400. The license application device 100 applies the license to a line device 400 connected using a local connection (connection without using the network) and acquires the license key from the license management device 200 connected via the WAN. As a result, even when the wireless device 400 exists in an environment in which the wireless device 400 cannot be connected to the network, the license key can be applied to the wireless device 400.

After the license application device 100 applies the license key to the wireless device 400, the license application device 100 deletes the license key. Accordingly, the license application device 100 holds the license key for each wireless device 400 only when it is required. Therefore, the security can be improved.

The license management device 200 manages the assignable upper limit number (refer to FIG. 5) that is the maximum number of licenses capable of being given to each function of the wireless device 400 in the system and controls the license allocation according to this assignable upper limit number. As a result, a state in which the number of licenses given in the whole system exceeds the assignable upper limit number can be avoided. Further, because the license management device 200 updates the assignable upper limit number for each license allocation, the license allocation can be correctly managed in the system.

The key generation device 300 encrypts the generated license key by using the identification information that is information unique to the wireless device 400. Therefore, each license key can be applied to only the corresponding wireless device 400.

While the invention made by the inventor has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

For example, a function which can be set to be available or unavailable by using the license key described above does not need to be a function related to wireless communication and arbitrary software or the like may be set to be available or unavailable by the license key.

A process carried out by each processing unit of the license application device 100 may be realized as a program which operates in an arbitrary computer. The program is stored by using various types of non-transitory computer-readable media and can be supplied to the computer. The non-transitory computer readable medium includes various types of tangible storage media. A magnetic recording medium (for example, a flexible disc, a magnetic tape, or a hard-disk drive), a magneto-optical recording medium (for example, a magnetic optical disc), a CD-ROM (Read-Only Memory), a CD-R, a CD-R/W, or a semiconductor memory (for example, a mask ROM, a PROM (Programmable ROM), an EPROM (Erasable PROM), a flash ROM, or a RAM (random access memory)) is exemplified as the non-transitory computer-readable medium. Further, the program may be supplied to the computer by using various types of transitory computer-readable media. An electric signal, an optical signal, or an electromagnetic wave is exemplified as the transitory computer-readable medium. The transitory computer-readable medium can supply the program to the computer via a wired communication path such as an electrical wire, an optical fiber, or the like or a wireless communication path.

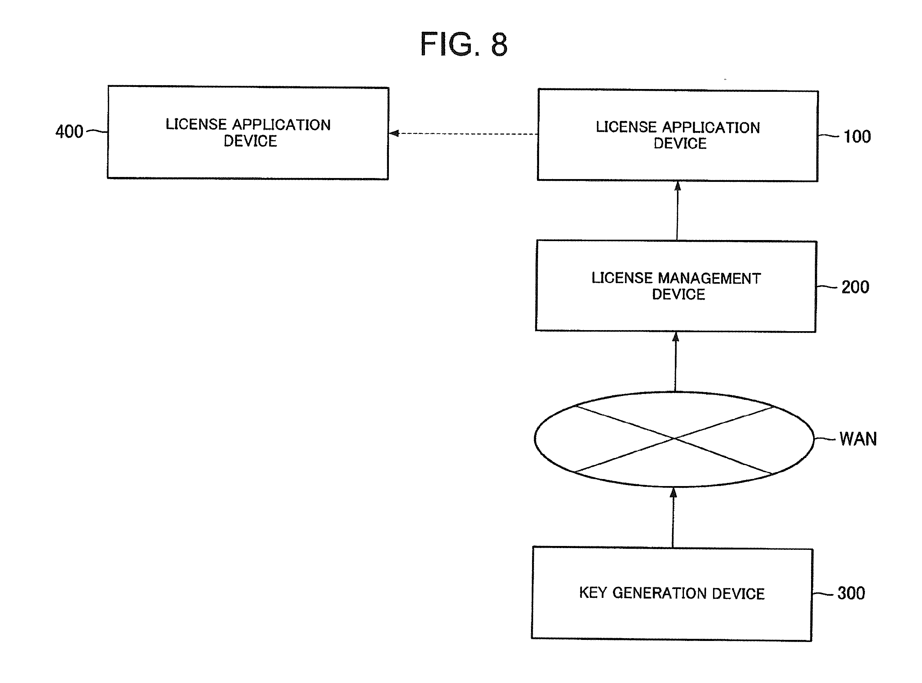

Lastly, concerning an outline of the license control system will be described again with reference to FIG. 8. In FIG. 8, a solid arrow line indicates data transmission and reception via the network and a dotted arrow line indicates data transmission and reception with offline connection.

The license management device 200 transmits the license key generation request for generation of the license key for the wireless device 400 to the key generation device 300 via the network. The key generation device 300 generates the license key for the wireless device 400 in response to the license key generation request and transmits it to the license management device 300. The license management device 300 transmits the license key for the wireless device 400 that is received from the key generation device 300 to the license application device 100. The license application device 100 is connected offline to the wireless device 400 and applies the received license key to the wireless device 400.

Thus, the license application device 100 can apply the license key to the wireless device 400 in the offline state. Therefore, even when the wireless device 400 is not connected to the network, the license management can be carried out.

This application is based upon and claims the benefit of priority from Japanese patent application No. 2012-204213, filed on September 18, 2012, the disclosure of which is incorporated herein in its entirety by reference.

### Reference signs List

- 100: license application device
- 101: key application unit
- 102: key storage unit
- 103: completion notification unit
- 104: key acquisition unit
- 105: device information acquisition unit
- 106: device information storage unit
- 200: license management device
- 201: key transmission unit
- 202: WAN communication unit
- 203: key request reception unit
- 204: upper limit number storage unit
- 205: completion notification acquisition unit
- 300: key generation device
- 301: WAN communication unit
- 302: default key generation unit
- 303: upgrade key generation unit
- 304: wireless device information storage unit
- 400: wireless device
- 401: device information notification unit
- 402: key information readout unit
- 403: wireless communication unit
- 404: key information storage unit
- 405: key reception unit

## Claims

1. A license control system including a license management device, a license application device, and a key generation device wherein
the license management device transmits a license key generation request for generation of a license key for a wireless device to the key generation device via a network and transmits the license key for the wireless device that is received from the key generation device to the license application device,
the key generation device generates the license key for the wireless device in response to the license key generation request and transmits it to the license management device, and
the license application device is connected offline to the wireless device and applies the received license key to the wireless device.

2. The license control system described in claim 1 **characterized in that** after the license application device applies the license key to the wireless device, the license application device deletes the applied license key from a storage unit thereof.

3. The license control system described in claim 1 or claim 2 **characterized in that** the license management device manages an assignable upper limit number that is the number of licenses that can be assigned to each function of the wireless device in the system and does not transmit the license key generation request to the key generation device when it is determined, by referring to the assignable upper limit number, that the license cannot be assigned.

4. The license control system described in any one of claims 1 to 3 **characterized in that** the key generation device generates the license key encrypted by using identification information of the wireless device.

5. The license control system described in claim 3 **characterized in that** the license management device updates the assignable upper limit number for each application of the license key to the wireless device.

6. The license control system described in any one of claims 1 to 5 **characterized in that** the license key is a default key which indicates an initial state or an upgrade key which indicates a change from the initial state.

7. A license application device including
key acquisition means which transmit a license generation request for generation of a license for a wireless device to a license management device via a network and receive a license key generated in response to the request,
key storage means which store the license key acquired by the key acquisition means in relation to identification information of the wireless device, and
key application means which apply the license key read from the key storage means based on the identification information of the wireless device to the wireless device in a state in which the key application means are connected offline to the wireless device.

8. The license application device described in claim 7 **characterized in that** the key application means delete the corresponding license key from the key storage means after the key application means apply the license key to the wireless device.

9. A non-transitory computer-readable medium storing a program which causes a computer to carry out a process of:
transmitting a license generation request for generation of a license for a wireless device to a license management device via a network and receiving a license key generated in response to the request and
applying the license key to the wireless device in a state of being connected offline to the wireless device.
[Claim. 10] A license control method in a license control system including a license management device, a license application device, and a key generation device wherein
the license management device transmits a license key generation request for generation of a license key for a wireless device to the key generation device and transmits the license key for the wireless device that is received from the key generation device to the license application device,
the key generation device generates the license key for the wireless device in response to the license key generation request and transmits it to the license management device, and
the license application device is connected offline to the wireless device and applies the received license key to the wireless device.
